# EUROPÄISCHE PATENTANMELDUNG

(11) **EP 1 985 467 A1**
(43) Veröffentlichungstag der Anmeldung: **29.10.2008**
(21) Anmeldenummer: 08007956.9
(22) Anmeldetag: 24.04.2008
(51) Int. Cl.: B60B 29/00, B25B 27/00

(54) **Radwechselvorrichtung**

(30) Priorität: 25.04.2007 WO PCT/DE2007/000735
(71) Anmelder: Ludwig Griesbeck Kraftfahrzeuge GmbH & Co.KG, 93413 Cham (DE)
(72) Erfinder: Fischer, Johann, 93473 Arnschwang (DE)
(74) Vertreter: Nowlan, Elke Ursula

(57) **Zusammenfassung**

Es wird ein Radwechselsystem (1) vorgesehen, welches zumindest ein erstes (2), ein zweites (3) und ein drittes Element (4) umfasst, wobei das erste Element (2) ein Mehrkantprofil mit einem ersten und einem zweiten Ende (5, 6) ist, wobei das erste Ende (5) einen Endabschnitt (7) aufweist, der mit einer an die Form einer Radmutter angepassten Öffnung (10) ausgebildet ist, und wobei über die Länge des Mehrkantprofils eine Vielzahl von voneinander beabstandeten und um den Umfang des Mehrkantprofils umlaufenden Einschnürungen (11) zur axialen Arretierung vorgesehen ist; wobei das zweite Element (3) mit einer zu dem Mehrkantprofil formkongruenten Öffnung (14) versehen ist, um auf das erste Element (2) aufsteckbar zu sein, und als Ratsche mit zumindest einem Hebelarm (12) ausgebildet ist, und wobei das dritte Element (4) als Ständer (15) mit einem ersten und einem zweiten Standbein (16, 17) ausgebildet ist, wobei zumindest eines der Standbeine (16, 17) mit einer Vielzahl von Ausnehmungen (23) versehen ist, die in ihrer Form und Größe angepasst sind, um eine der an dem zweiten Ende (6) des ersten Elements (2) vorgesehenen Einschnürungen (11) zur axialen Arretierung in Eingriff zu nehmen. Weiterhin werden ein Ständer (15) sowie eine Schraubenschlüsselvorrichtung (29) vorgesehen.

## Beschreibung

Die Erfindung betrifft ein Radwechselsystem zum Wechseln von Rädern an einem Kraftfahrzeug, einen Ständer für eine Schraubenschlüsselvorrichtung sowie eine Schraubenschlüsselvorrichtung.

Zum Wechseln von Rädern bzw. zum Lösen und Festziehen der Radmuttern sind im Stand der Technik verschiedene Werkzeuge bekannt. Üblicherweise wird zum Radwechsel ein einfacher Schraubenschlüssel bzw. Radmutternschlüssel verwendet. Da der zum Radwechsel notwendige Kraftaufwand relativ groß ist, sind im Stand der Technik weiterhin Schraubenschlüssel bekannt, die zur Verringerung des Kraftaufwands beitragen. So kann beispielsweise ein Ratschen- bzw. Knarrenschlüssel eingesetzt werden, der das Lösen und Festziehen von Radmuttern erleichtert. Eine andere bekannte kraftverringernde Variante ist ein Radmutternkreuzschlüssel, bei dem die durch den Kreuzschlüssel vorgesehene Hebelwirkung dazu beiträgt, das Lösen und Festziehen der Radmuttern zu erleichtern.

Jedoch ist es gerade bei schweren und großen Kraftfahrzeugen wie Lastkraftwagen oft für Personen nicht möglich mittels der oben genannten mechanischen Werkzeuge Muttern z. B. im Falle einer Reifenpanne zu lösen, die mittels eines pneumatischen Schraubenschlüssels festgezogen worden sind oder die lange nicht ausgewechselt worden sind und sich sozusagen "festgefressen" haben oder bereits rostig sind. Auch bei den kleineren und leichteren Personenkraftwagen können Probleme beim Radwechsel mit den herkömmlichen Werkzeugen in den oben genannten Fällen auftreten oder in den Fällen, wo Personen, die nicht viel Kraft aufbringen können, den Radwechsel vorzunehmen haben.

Besonders schwierig gestaltet sich dann ein Radwechsel, wenn im Falle einer Panne der Radwechsel in unebenem Gelände, z. B. am Fahrbahnrand vorgenommen werden muss und es zudem besonders schnell gehen muss. Auch ist es schwierig bei Nacht oder bei schlechter Sicht und bei Regen den Radwechsel durchzuführen. Oft rutscht dabei das Werkzeug von der Radmutter dann ab oder kann nicht in der richtigen Position gehalten werden, um die Muttern zu lösen bzw. festzuziehen, so dass eine Peson alleine nicht in der Lage ist, den Radwechsel vorzunehmen.

Daher ist es die Aufgabe der vorliegenden Erfindung, ein Radwechselsystem vorzusehen, das den Radwechsel dadurch vereinfacht, dass es mehr Stabilität bei gleichzeitiger Optimierung des Krafteinsatzes vorsieht.

Die Aufgabe der vorliegenden Erfindung wird durch ein Radwechselsystem mit den Merkmalen gemäß Anspruch 1, einem Ständer mit den Merkmalen gemäß Anspruch 16 sowie mit einer Schraubenschlüsselvorrichtung mit den Merkmalen gemäß Anspruch 24 gelöst. Bevorzugte Ausführungsformen der vorliegenden Erfindung sind in den jeweiligen Unteransprüchen definiert.

Erfindungsgemäß wird ein Radwechselsystem vorgesehen, welches zumindest ein erstes, ein zweites und ein drittes Element umfasst, wobei das erste Element ein Mehrkantprofil mit einem ersten und einem zweiten Ende ist, wobei das erste Ende einen Endabschnitt aufweist, der mit einer an die Form einer Radmutter angepassten Öffnung ausgebildet ist, und wobei über die Länge des Mehrkantprofils eine Vielzahl von voneinander beabstandeten und um den Umfang des Mehrkantprofils umlaufenden Einschnürungen zur axialen Arretierung vorgesehen ist; wobei das zweite Element mit einer zu dem Mehrkantprofil formkongruenten Öffnung versehen ist, um auf das erste Element aufsteckbar zu sein, und als Ratsche mit zumindest einem Hebelarm ausgebildet ist, und wobei das dritte Element als Ständer mit einem ersten und einem zweiten Standbein ausgebildet ist, wobei zumindest eines der Standbeine mit einer Vielzahl von Ausnehmungen versehen ist, die in ihrer Form und Größe angepasst sind, um eine der an dem zweiten Ende des ersten Elements vorgesehenen Einschnürungen zur axialen Arretierung in Eingriff zu nehmen.

Durch das erfindungsgemäße Radwechselsystem wird ein modulares Werkzeugsystem bereitgestellt, mittels welchem die Raddemontage/Radmontage bzw. das Lösen und Festziehen der Radmuttern erheblich vereinfacht wird. Insbesondere bietet das Radwechselsystem gemäß der Erfindung eine außerordentlich standfeste und stabile Konstruktion, mittels welcher ein Abrutschen des Schraubenschlüssels von der Radmutter effektiv verhindert wird. Auch ist die Vorrichtung durch die Vielzahl von Ausnehmungen in zumindest einem der Standbeine in der Höhe einstellbar. Weiterhin wird durch die Vielzahl von Einschnürungen, die auf dem ersten Element vorgesehen sind, und die in eine der Ausnehmungen des Standbeins entsprechend der gewünschten Höhe eingreifen sowohl eine axiale Einstellbarkeit entsprechend dem gewünschten Abstand des Ständers von dem Rad als auch eine axiale Arretierung des ersten Elements in dem Ständer erzielt. Somit ist das Radwechselsystem nicht nur in zwei Richtungen einstellbar, sondern gleichzeitig wird durch die axiale Arretierung des zweiten Elements in dem dritten Element bzw. in dem Ständer wiederum die Stabilität des Radwechselsystems erheblich erhöht. Durch die zweibeinige Ausführung des Ständers bietet das Radwechselsystem auch insbesondere auf unebenem Untergrund oder in ansteigendem/abfallenden Gelände Standsicherheit und Stabilität. Das zweite als Ratsche ausgebildete Element vereinfacht dagegen die Handhabung bzw. reduziert den Kraftaufwand, der im Vergleich mit einem einfachen Schraubenschlüssen oder Vierkantschlüssel aufzubringen ist. Das erfindungsgemäße Radwechselsystem ist durch seinen modularen Aufbau besonders einfach und kostengünstig herstellbar.

Gemäß einer bevorzugten Ausführungsform ist das Mehrkantprofil des ersten Elements ein Sechskantprofil.

In einer weiteren bevorzugten Ausführungsform ist die Öffnung des zweiten Elements eine durchgehende Innensechskantöffnung. Die Größe der Innensechskantöffnung ist der Größe des Sechskantprofils angepasst, so dass das zweite Element problemlos auf das erste Element aufsteckbar ist.

Besonders bevorzugt ist es, wenn das zweite Element mit zwei Hebelarmen versehen ist, die sich beiderseitig der Öffnung des zweiten Elements gegenüberliegen und eine gemeinsame Hebelachse bilden. Dies ermöglicht eine besonders einfache und effiziente Handhabung des Radwechselsystems.

Weiterhin ist es vorteilhaft, dass der mit einer an die Form einer Radmutter angepassten Öffnung versehene Endabschnitt lösbar an dem ersten Element vorgesehen ist bzw. auf das erste Element aufsteckbar ist. Vorzugsweise ist der Endabschnitt als Rohrsteckschlüsselkopf bzw. Nuss ausgebildet. Somit können verschiedene Aufsätze bzw. Nüsse mit verschiedenen Schlüsselweiten in Verbindung mit dem Radwechselsystem verwendet werden.

Eine andere bevorzugte Ausführungsform sieht vor, dass der mit einer an die Form einer Radmutter angepassten Öffnung versehene Endabschnitt integral mit dem ersten Element ausgebildet ist. Diese Ausführungsform reduziert die Anzahl der Einzelteile des Radwechselsystems.

In noch einer weiteren bevorzugten Ausführungsform sind das erste und das zweite Standbein des dritten Elements Vierkantrohre. Die Verwendung von Vierkantrohren z. B. im Vergleich zu Rundrohren hat den Vorteil, dass sie im zusammengesteckten bzw. zusammengebauten Zustand eine Verdrehsicherung bieten.

Vorteilhaft ist weiterhin, wenn das erste Standbein und das zweite Standbein des dritten Elements unterschiedliche Längen aufweisen. Diese Konstruktion bietet dem Radwechselsystem noch mehr Standsicherheit und Stabilität.

Insbesondere ist das erste Standbein kürzer als das zweite Standbein ausgebildet, und das zweite Standbein mit einem radial von einer der Außenflächen des Vierkantrohres abragenden Platte versehen ist.

Vorzugsweise ist die Platte mit einer Vielzahl von voneinander beabstandeten abgerundeten Ausnehmungen ausgebildet, die in ihrer Form und Abmessung angepasst sind, um eine der auf dem ersten Element vorgesehenen Einschnürungen in Eingriff zu nehmen. Somit wird eine axiale Arretierung des zweiten Elements in dem Ständer bzw. dem dritten Element erreicht, die noch mehr Stabilität und Standsicherheit beim Radwechsel bietet.

Weiterhin ist bevorzugt, dass das erste und zweite Standbein als separate Teile ausgebildet sind, wodurch eine platzsparende Lagerung im Fahrzeug ermöglicht wird. Bei Bedarf bzw. beim Einsatz des Radwechselsystems werden das erste und das zweite Standbein einfach zusammengesteckt, um den Ständer zu bilden.

Noch eine weitere bevorzugte Ausführungsform sieht vor, dass das zweite Standbein an seinem oberen Ende mit einem schräg nach unten abragenden Vierkantprofil versehen ist, wobei das Vierkantprofil angepasst ist, um in das obere Ende des Vierkantrohres des ersten Standbeins eingesteckt zu werden, so dass das erste und das zweite Standbein zusammen eine im Wesentlichen umgekehrte V-förmige Struktur ausbilden. Diese Struktur des Ständers bietet noch mehr Standsicherheit und Stabilität.

Vorzugsweise weist jedes der Standbeine einen zusätzlichen Standfuß auf.

Die jeweiligen Standfüße sind gemäß noch einer bevorzugten Ausführungsform als separate Teile vorgesehen, was wiederum besonders platzsparend ist, wenn das Radwechselsystem nicht im Einsatz ist und z. B. in einem Kofferraum eines Kraftfahrzeugs gelagert wird. Jeder Standfuß ist aus einem im Wesentlichen T-förmigen Vierkantprofil ausgebildet, das in das untere Ende eines jeweiligen Vierkantrohres der Standbeine einsteckbar ist, wenn das Radwechselsystem zusammengebaut wird.

Besonders bevorzugt ist weiterhin, dass das Radwechselsystem zusammensteckbar modular ausgebildet ist. Dies bietet, wie bereits ausgeführt, eine besonders platzsparende Lösung. Weiterhin ermöglicht der modulare Aufbau eine kostengünstige Produktion.

Weiterhin wird ein Ständer zur Aufnahme und Halterung einer Schraubenschlüsselvorrichtung vorgesehen, die zum Lösen und Festziehen von Radmuttern eines Kraftfahrzeuges ausgebildet ist, wobei der Ständer zweibeinig mit einem ersten und einem zweiten aus einem Mehrkantrohr bestehenden Bein ausgebildet ist, wobei zumindest eines der Beine mit einer radial von einer der Außenflächen des Mehrkantrohres abragenden Platte versehen, welche mit einer Vielzahl von voneinander beabstandeten abgerundeten Ausnehmungen ausgebildet ist, die in ihrer Form und Abmessung angepasst sind, um ein Element der Schraubenschlüsselvorrichtung darin in Eingriff zu nehmen. Der erfindungsgemäße Ständer bietet eine außerordentlich große Standsicherheit und Stabilität sowohl auf unebenem Gelände als auch am Berg. Durch die Vielzahl von Ausnehmungen bietet der Ständer die Möglichkeit, einen Schraubenschlüssel auf unterschiedlichen Niveaus darin einzusetzen, so dass Muttern an einem Rad an verschiedenen Niveaus gelöst bzw. festgezogen werden können.

Vorzugsweise ist das Mehrkantrohr ein Vierkantrohr. Gemäß einer weiteren bevorzugten Ausführungsform weisen das erste Standbein und das zweite Standbein unterschiedliche Längen auf.

Noch bevorzugter ist, wenn das erste Standbein kürzer als das zweite Standbein ausgebildet ist, und dass die Platte an dem zweiten Standbein vorgesehen ist.

Das erste und zweite Standbein können vorzugsweise als separate Teile ausgebildet sind.

Nach einer weiteren bevorzugten Ausführungsform ist das zweite Standbein an seinem oberen Ende mit einem schräg nach unten abragenden Vierkantprofil versehen, wobei das Vierkantprofil angepasst ist, um in das obere Ende des Vierkantrohres des ersten Standbeins eingesteckt zu werden, so dass das erste und das zweite Standbein zusammen eine im Wesentlichen V-förmige Struktur ausbilden.

Vorzugsweise weist jedes der Standbeine einen Standfuß auf, wobei weiterhin bevorzugt ist, wenn die jeweiligen Standfüße als separate Teile vorgesehen sind, wobei jeder Standfuß aus einem im Wesentlichen T-förmigen Vierkantprofil ausgebildet ist, das in das untere Ende eines jeweiligen Vierkantrohres der Standbeine einsteckbar ist.

Darüber hinaus wird eine Schraubenschlüsselvorrichtung zum Lösen und Festziehen von Radmuttern an einem Kraftfahrzeug bereitgestellt, welche zumindest ein erstes und ein zweites Element umfasst, wobei das erste Element ein Mehrkantprofil mit einem ersten und einem zweiten Ende ist, wobei das erste Ende einen Endabschnitt aufweist, der mit einer an die Form einer Radmutter angepassten Öffnung ausgebildet ist, und wobei über die Länge des Mehrkantprofils eine Vielzahl von voneinander beabstandeten und um den Umfang des Mehrkantprofils umlaufenden Einschnürungen vorgesehen ist; und wobei das zweite Element mit einer zu dem Mehrkantrohr formkongruenten Öffnung versehen ist, um auf das erste Element aufsteckbar zu sein, und als Ratsche mit zumindest einem Hebelarm ausgebildet ist. Die erfindungsgemäße Schraubenschlüsselvorrichtung bietet eine vereinfachte Handhabung beim Radwechsel und wirkt insbesondere in Zusammenhang mit dem erfindungsgemäßen Ständer kraftreduzierend.

Vorzugsweise ist das Mehrkantprofil ein Sechskantprofil. Gemäß noch einer bevorzugten Ausführungsform ist die Öffnung des zweiten Elements eine durchgehende Innensechskantöffnungt.

Bevorzugt ist auch, wenn das zweite Element mit zwei Hebelarmen versehen ist, die sich beiderseitig der Öffnung des zweiten Elements gegenüberliegen und eine gemeinsame Hebelachse bilden.

Gemäß einer weiteren bevorzugten Ausführugnsfrom ist der mit einer an die Form einer Radmutter angepassten Öffnung versehene Endabschnitt lösbar an dem ersten Element vorgesehen.

Vorzugsweise ist der Endabschnitt als Rohrsteckschlüsselkopf, insbesondere als Nuss, ausgebildet.

Der mit einer an die Form einer Radmutter angepassten Öffnung versehene Endabschnitt ist integral mit dem ersten Element ausgebildet.

Ein Ausführungsbeispiel eines erfindungsgemäßen Radwechselsystems mit einem Ständer und einer Schraubenschlüsselvorrichtung ist in der Zeichnung vereinfacht dargestellt und wird in der nachfolgenden Beschreibung näher erläutert. Es zeigen:
- Fig. 1A: eine Ansicht des erfindungsgemäßen Radwechselsystems für einen PKW im in Einzelteile zerlegtem Zustand;
- Fig. 1 B: eine Ansicht des erfindungsgemäßen Radwechselsystems für einen LKW im in Einzelteile zerlegtem Zustand;
- Fig. 2: eine perspektivische Ansicht des erfindungsgemäßen Radwechselsystems für einen PKW in zusammengesetztem Zustand; und
- Fig.3: eine perspektivische Ansicht des erfindungsgemäßen Radwechselsystems für einen LKW in zusammengesetztem Zustand.

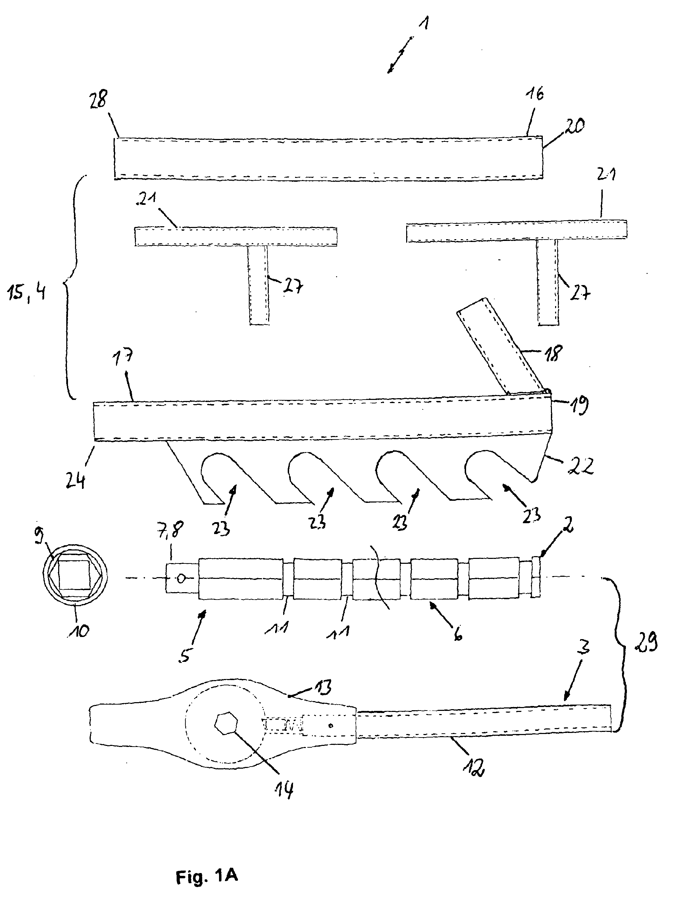

Fig. 1A zeigt eine Ansicht aller Einzelteile des erfindungsgemäßen Radwechselsystems 1 in zerlegtem Zustand. Das Radwechselsystem 1 ist in diesem Fall für die Anwendung an einem Personenkraftwagen geeignet bzw. in der Abmessung und Materialeigenschaften für den Einsatz an einem PKW angepasst. Das Radwechselsystem 1 ist modular zusammensteckbar aufgebaut und weist in diesem Fall sieben voneinander getrennte Einzelteile auf. Der modulare Aufbau ist nicht nur bezüglich der Lagerung des Radwechselsystems 1 von Vorteil, sondern ist auch besonders einfach herstellbar. Darüber hinaus können defekte Einzelteile separat ausgetauscht werden und es muss bei Versagen eines Teils nicht gleich die ganze Vorrichtung ersetzt werden. Das Radwechselsystem 1 weist drei Hauptkomponenten bzw. Elemente auf. Diese sind ein erstes Element 2 in Form eines Sechskantprofils, ein zweites Element 3 in Form eines Ratschenelements und ein drittes Element 4, das wiederum aus mehreren Elementen aufgebaut wird, die zusammen einen Ständer bilden.

Das erste Element 2 weist ein erstes Ende 5 und ein zweites Ende 6 auf. An dem ersten Ende 5 ist an einem Endabschnitt 7 ein Ansatz 8 in Form eines Vierkantprofils vorgesehen, der dazu dient eine Nuss bzw. einen Rohrsteckschlüsselkopf 9 mit einer an die Form einer Radmutter angepassten Öffnung 10 in Eingriff zu nehmen. Alternativ kann die Nuss bzw. der Rohrsteckschlüsselkopf 9 auch integral mit dem ersten Element 2 ausgebildet sein. Weiterhin weist das erste Element 2 über seine Länge beabstandete Einschnürungen 11 auf, die dazu dienen, das erste Element 2 in dem Ständer bzw. dem dritten Element 4 axial zu arretieren. Durch Vorsehen der Vielzahl von Einschnürungen 11 kann der Ständer in einer Vielzahl von unterschiedlich weit von einem zu wechselnden Rad beabstandeten Positionen arretiert werden. Dies kann u. a. wichtig sein, wenn der Untergrund, auf dem der Ständer bzw. das dritte Element 4 aufgestellt wird, unregelmäßig oder uneben ist.

Das zweite Element 3 umfasst einen Hebelarm 12 und ein Ratschenelement 13 mit einem Ratschenmechanismus. Das Ratschenelement 13 weist eine Öffnung 14 in Form einer Innensechskantöffnung auf, die in der Größe angepasst ist, um auf das Sechskantprofil des ersten Elements 2 aufgesteckt zu werden, um mit diesem zusammen als Ratsche betätigt zu werden. Im Falle des Radwechselsystems 1 für einen PKW beträgt die Schlüsselweite der Öffnung 14 z. B. 19. Das erste 2 und das zweite Element 3 bilden zusammen eine Schraubenschlüsselvorrichtung 29.

Das dritte Element 4, das den Ständer 15 bildet, umfasst hier vier Einzelteile, die zusammensteckbar ausgebildet sind. Um ein Verdrehen der Einzelteile in zusammengesetzten Zustand zu verhindern, sind diese im Wesentlichen aus Vierkantrohren gebildet. Die Einzelteile des dritten Elements 4 sind ein erstes Standbein 16, das mit einem zweiten Standbein 17 über einen von einem oberen Ende 19 des zweiten Standbeins 17 schräg abragenden Vierkantprofil 18 verbunden wird, indem das schräg abragende Vierkantprofil 18 in das obere Ende 20 des innen hohlen Vierkantrohrs 16 eingesteckt wird, so dass die beiden Standbeine 16, 17 in zusammengebauten Zustand gemeinsam ein im Wesentlichen V-förmiges Element bilden, wobei das erste Standbein 16 kürzer ist als das zweite Standbein 17. Das zweite Standbein 17 ist weiterhin an einer Außenfläche des Vierkantrohrs mit einer im Wesentlichen senkrecht davon abragenden Platte 22 versehen, die z. B. daran mittels Schweißen angebracht sein kann. Die abragende Platte 22 weist eine Vielzahl von voneinander beabstandeten abgerundeten Ausnehmungen 23 auf, welche in zusammengesetzem Zustand des Radwechseslsystems 1 in Eingriff mit einer der Einschnürungen 11 des ersten Elements 2 stehen, um dieses axial zu arretieren. Weiterhin weist das dritte Element 4 zwei separat ausgebildete Standfüße 21 auf, die einem im Wesentlichen T-förmig gebildeten Vierkantprofil entsprechen. Jeder Standfuß 21 ist mit einem Abschnitt 27 in ein jeweiliges unteres Ende 28, 24 der Standbeine 16, 17 einsteckbar.

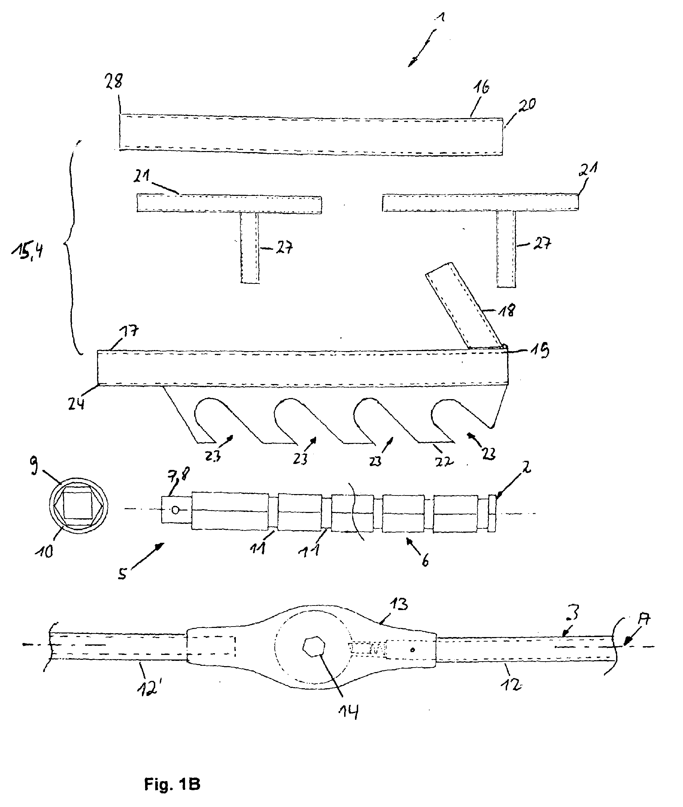

Fig. 1B zeigt eine Ansicht aller Einzelteile des erfindungsgemäßen Radwechselsystems 1 in zerlegtem Zustand, jedoch ist das Radwechselsystem 1 in diesem Fall für die Anwendung an einem Lastkraftwagen geeignet bzw. in der Abmessung und Materialeigenschaften für den Einsatz an einem LKW angepasst. Die Einzelteile des Radwechselsystems 1 für einen LKW entsprechen im Wesentlichen den Einzelteilen des Radwechselsystems 1 für einen PKW, sie sind jedoch, wie bereits erwähnt, größer und stärker ausgebildet. So beträgt z. B. die Schlüsselweite der Öffnung14 in dem Ratschenelement 13 24. Weiterhin ist in dieser Ausführungsform das zweite Element 3 mit zwei Hebelarmen 12, 12' versehen, die sich beiderseitig der Öffnung 14 des zweiten Elements 3 gegenüberliegen und eine gemeinsame Hebelachse A bilden.

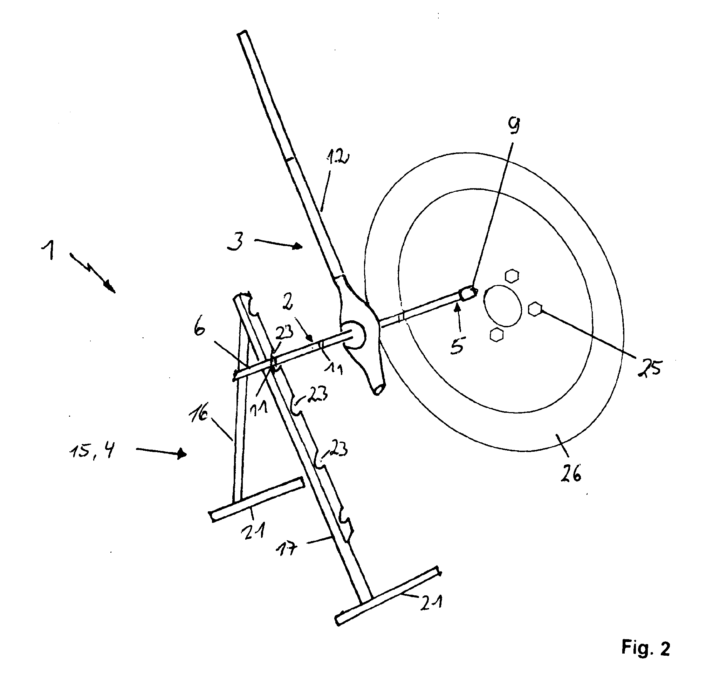

Fig. 2 ist eine perspektivische Ansicht des erfindungsgemäßen Radwechselsystems 1 für einen PKW in zusammengesetztem Zustand. Fig. 2 zeigt insbesondere, wie das Radwechselsystem 1 beim Radwechsel zum Lösen und Festziehen der Radmuttern 25 an einem PKW-Rad 26 eingesetzt wird. Dabei wird das erste Element 2 mit dem ersten Ende 5, an dem die Nuss 9 vorgesehen ist, auf eine der Radmuttern 25 aufgesetzt und mit dem zweiten Ende 6 mit einer der auf dem ersten Element 2 vorgesehenen Einschnürungen 11 in einer der Höhe der Radmutter 25 entsprechenden Ausnehmung 23 des zweiten Standbeins 17 des Ständers 15 arretiert. Im Wesentlichen mittig zwischen dem ersten Ende 5 des ersten Elements 2 und dem Ständer 15 ist das zweite Element 3 auf dem ersten Element 2 angeordnet. In dem hier dargestellten Fall weist das dritte Element 3 nur einen Hebelarm 12 auf, der von einem Benutzer betätigt wird, um die Radmutter 25 an dem Rad 26 zu lösen oder festzuziehen.

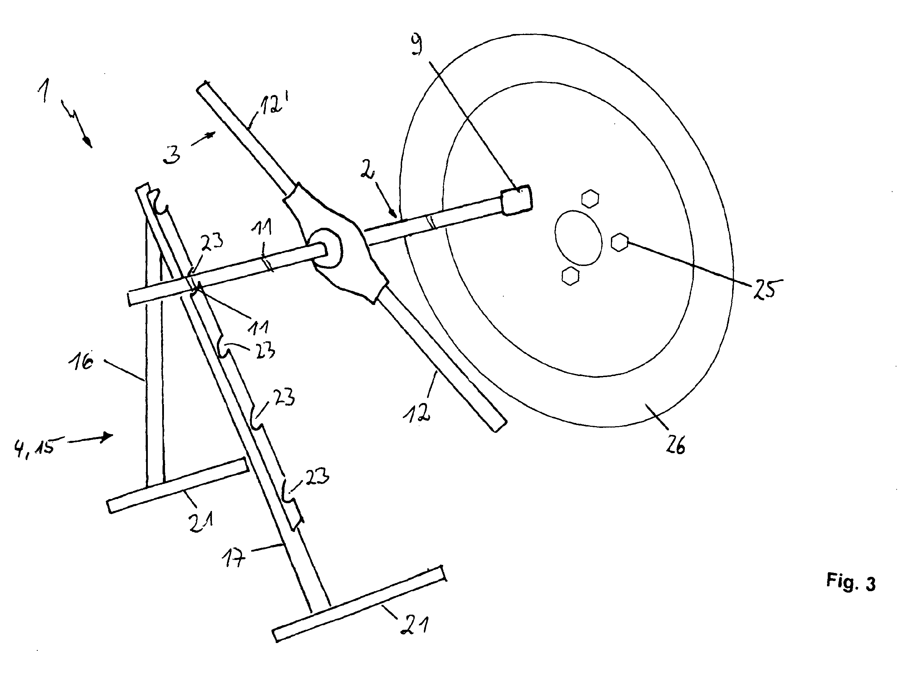

Fig. 3 ist eine weitere perspektivische Ansicht des erfindungsgemäßen Radwechselsystems 1 in zusammengesetztem Zustand, hier jedoch für einen LKW. Da das Rad 26 des LKWs wesentlich größer ist als das Rad eines PKWs und daher auch mehr Kraft zum Lösen und Festziehen der Radmuttern aufgebracht werden muss, ist das Radwechselsystem 1 größer und stärker als das entsprechende Radwechselsystem 1 für einen PKW ausgebildet. Die Anordnung der Einzelteile ist jedoch die gleiche wie in dem in Fig. 2 dargestellten Fall. Lediglich das zweite Element 3 weist anstelle nur eines Hebelarms 12 zwei Hebelarme 12, 12' auf, die eine gemeinsame Achse bilden. Es kann jedoch ebenso ein zweites Element 3 mit nur einem Hebelarm 12 eingesetzt werden, bzw. in dem in Fig. 2 gezeigten Beispiel kann ebenso eine zwei Hebelarme 12, 12' aufweisende Vorrichtung eingesetzt werden.

### Bezugszeichenliste

- 1: Radwechselsystem
- 2: erstes Element
- 3: zweites Element
- 4: drittes Element
- 5: erstes Ende des ersten Elements
- 6: zweites Ende des ersten Elements
- 7: Endabschnitt
- 8: Ansatz
- 9: Rohrsteckschlüsselkopf bzw. Nuss
- 10: Öffnung
- 11: Einschnürung
- 12,12': Hebelarm
- 13: Ratschenelement
- 14: Öffnung
- 15: Ständer
- 16: erstes Standbein
- 17: zweites Standbein
- 18: abragendes Vierkantprofil
- 19: oberes Ende
- 20: oberes Ende
- 21: Standfuß
- 22: abragende Platte
- 23: Ausnehmung
- 24: unteres Ende
- 25: Radmutter
- 26: Rad
- 27: Abschnitt
- 28: unteres Ende
- 29: Schraubenschlüsselvorrichtung
- A: Hebelachse

## Patentansprüche

**1.** Radwechselsystem (1), welches zumindest ein erstes (2), ein zweites (3) und ein drittes Element (4) umfasst,
wobei das erste Element (2) ein Mehrkantprofil mit einem ersten und einem zweiten Ende (5, 6) ist, wobei das erste Ende (5) einen Endabschnitt (7) aufweist, der mit einer an die Form einer Radmutter angepassten Öffnung (10) ausgebildet ist, und wobei über die Länge des Mehrkantprofils eine Vielzahl von voneinander beabstandeten und um den Umfang des Mehrkantprofils umlaufenden Einschnürungen (11) zur axialen Arretierung vorgesehen ist;
wobei das zweite Element (3) mit einer zu dem Mehrkantprofil formkongruenten Öffnung (14) versehen ist, um auf das erste Element (2) aufsteckbar zu sein, und als Ratsche mit zumindest einem Hebelarm (12) ausgebildet ist, und
wobei das dritte Element (4) als Ständer (15) mit einem ersten und einem zweiten Standbein (16, 17) ausgebildet ist, wobei zumindest eines der Standbeine (16, 17) mit einer Vielzahl von Ausnehmungen (23) versehen ist, die in ihrer Form und Größe angepasst sind, um eine der an dem zweiten Ende (6) des ersten Elements (2) vorgesehenen Einschnürungen (11) zur axialen Arretierung in Eingriff zu nehmen.

**2.** Radwechselsystem (1) gemäß Anspruch 1,
**dadurch gekennzeichnet,**
**dass** das Mehrkantprofil ein Sechskantprofil ist.

**3.** Radwechselsystem (1) gemäß Anspruch 1 oder 2,
**dadurch gekennzeichnet,**
**dass** die Öffnung (14) des zweiten Elements (3) eine durchgehende Innensechskantöffnung ist.

**4.** Radwechselsystem (1) gemäß einem der vorhergehenden Ansprüche,
**dadurch gekennzeichnet,**
**dass** das zweite Element (3) mit zwei Hebelarmen (12, 12') versehen ist, die sich beiderseits der Öffnung (14) des zweiten Elements (3) gegenüberliegen und eine gemeinsame Hebelachse (A) bilden.

**5.** Radwechselsystem (1) gemäß einem der vorhergehenden Ansprüche,
**dadurch gekennzeichnet,**
**dass** der mit einer an die Form einer Radmutter (25) angepassten Öffnung (10) versehene Endabschnitt (7) lösbar an dem ersten Element (2) vorgesehen ist.

**6.** Radwechselsystem (1) gemäß Anspruch 5,
**dadurch gekennzeichnet,**
**dass** der Endabschnitt (7) als Rohrsteckschlüsselkopf (9) ausgebildet ist.

**7.** Radwechselsystem (1) gemäß einem der Ansprüche 1 bis 4,
**dadurch gekennzeichnet,**
**dass** der mit einer an die Form einer Radmutter (25) angepassten Öffnung (10) versehene Endabschnitt (7) integral mit dem ersten Element (2) ausgebildet ist.

**8.** Radwechselsystem (1) gemäß einem der vorhergehenden Ansprüche,
**dadurch gekennzeichnet,**
**dass** das erste und das zweite Standbein (16, 17) des dritten Elements (4) Vierkantrohre sind.

**8.** Radwechselsystem (1) gemäß einem der vorhergehenden Ansprüche,
**dadurch gekennzeichnet,**
**dass** das erste Standbein (16) und das zweite Standbein (17) des dritten Elements (3) unterschiedliche Längen aufweisen.

**9.** Radwechselsystem (1) gemäß einem der vorhergehenden Ansprüche,
**dadurch gekennzeichnet,**
**dass** das erste Standbein (16) kürzer als das zweite Standbein (17) ausgebildet ist, und das zweite Standbein (17) mit einem radial von einer der Außenflächen des Vierkantrohres abragenden Platte (22) versehen ist.

**10.** Radwechselsystem (1) gemäß Anspruch 9,
**dadurch gekennzeichnet,**
**dass** die Platte (22) mit einer Vielzahl von voneinander beabstandeten abgerundeten Ausnehmungen (23) ausgebildet ist, die in ihrer Form und Abmessung angepasst sind, um eine der auf dem ersten Element (2) vorgesehenen Einschnürungen (11) in Eingriff zu nehmen.

**11.** Radwechselsystem (1) gemäß einem der vorhergehenden Ansprüche,
**dadurch gekennzeichnet,**
**dass** das erste und zweite Standbein (16, 17) als separate Teile ausgebildet sind.

**12.** Radwechselsystem (1) gemäß einem der vorhergehenden Ansprüche,
**dadurch gekennzeichnet,**
**dass** das zweite Standbein (17) an seinem oberen Ende (19) mit einem schräg nach unten abragenden Vierkantprofil (18) versehen ist, wobei das Vierkantprofil (18) angepasst ist, um in das obere Ende des Vierkantrohres des ersten Standbeins (16) eingesteckt zu werden, so dass das erste und das zweite Standbein (16, 17) zusammen eine im Wesentlichen V-förmige Struktur ausbilden.

**13.** Radwechselsystem (1) gemäß einem der vorhergehenden Ansprüche,
**dadurch gekennzeichnet,**
**dass** jedes der Standbeine (16, 17) einen Standfuß (21) aufweist.

**14.** Radwechselsystem (1) gemäß Anspruch 13,
**dadurch gekennzeichnet,**
**dass** die jeweiligen Standfüße (21) als separate Teile vorgesehen sind, wobei jeder Standfuß (21) aus einem im Wesentlichen T-förmigen Vierkantprofil ausgebildet ist, das in das untere Ende (24, 28) eines jeweiligen Vierkantrohres der Standbeine (16, 17) einsteckbar ist.

**15.** Radwechselsystem (1) gemäß einem der vorhergehenden Ansprüche,
**dadurch gekennzeichnet,**
**dass** das Radwechselsystem (1) zusammensteckbar modular ausgebildet ist.
